# FASCICULE DE BREVET EUROPEEN

(11) **EP 3 509 751 B1**
(45) Date de publication et mention de la délivrance du brevet: **16.02.2022**
(21) Numéro de dépôt: 17792120.2
(22) Date de dépôt: 09.10.2017
(51) Int. Cl.: B01L 3/02

(54) **PIPETTES MONOCANAL OU MULTICANAL À ACTIONNEMENT MANUEL AVEC BOUTON DE COMMANDE**
HANDBEDIENTE EINKANAL- ODER MEHRKANALPIPETTEN MIT BEDIENTASTE
MANUALLY-OPERATED MONO-CHANNEL OR MULTI-CHANNEL PIPETTES WITH CONTROL BUTTON

(30) Priorité: 10.10.2016 FR 1659760
(43) Date de publication de la demande: 17.07.2019
(73) Titulaire: GILSON SAS, 95400 Villiers-le-Bel (FR)
(72) Inventeur: PARIS, Nicolas, 54000 Nancy (FR); SANQUER, Frédéric, 93290 Tremblay-en-France (FR); DE MAACK, Frédéric, 75016 Paris (FR)
(74) Mandataire: Brevalex
(86) Numéro de dépôt international: PCT/FR2017/052754
(87) Numéro de publication internationale: WO 2018/069611

(56) Documents cités:
- WO-A1-2005/085775
- DE-A1- 19 911 397
- FR-A1- 2 986 718
- FR-A1- 2 986 718
- US-A1- 2006 085 162
- US-A1- 2013 305 844

## Description

### DOMAINE TECHNIQUE

L'invention se situe dans le domaine des pipettes et concerne plus spécifiquement des pipettes monocanal ou multicanal à actionnement manuel pour le prélèvement et la distribution d'un échantillon d'un liquide selon un protocole prédéfini, munies d'un bouton de commande destiné à équiper de telles pipettes. Ces pipettes sont destinées à être tenues en main par un opérateur durant les opérations de prélèvement et de distribution de l'échantillon, ces opérations étant réalisées par mise en mouvement d'un bouton de commande obtenue par l'application, sur ce bouton, d'une pression axiale d'actionnement. L'enchaînement de ces actions sur une ou plusieurs pipettes constitue l'exécution du protocole de pipetage prédéfini.

### ÉTAT DE LA TECHNIQUE ANTÉRIEURE

Dans les pipettes de l'antérieur, aucune vérification /validation du volume réellement distribué par une pipette manuelle n'est possible en temps réel et de manière directe hormis la possibilité hypothétique de placer l'échantillon sur une balance. Même dans ce cas, la précision nécessaire de la balance pour mesurer le volume délivré dans le respect de la norme ISO8655 serait incompatible avec l'encombrement et le poids total de l'échantillon.

La tenue d'un cahier de laboratoire manuel ou électronique, supposé refléter les différentes actions de l'opérateur pour les enregistrer et les valider par rapport à un protocole ne répond qu'imparfaitement à l'exigence de traçabilité puisque ce registre ne donne pas de renseignement sur la qualité de l'opération. De plus la tenue de ce cahier nécessite la participation active et continue de l'opérateur. Par ailleurs si la connexion entre instruments (pipettes ou autres) et systèmes de gestion centralisée du laboratoire est connue (LIMS), elle est réservée aux pipettes électroniques ou hybrides possédant par construction une alimentation autonome, des capteurs, des systèmes de traitement de l'information et des émetteurs-récepteurs.

FR 2 986 718 A1 décrit une pipette de prélèvement comprenant un bouton de commande intégrant un commutateur, un microprocesseur et un émetteur-récepteur.

Un but de l'invention est d'intégrer sur une pipette monocanal ou multicanal à actionnement manuel un système d'information autonome, ne modifiant pas la gestuelle de l'opérateur et ne réclamant pas son assistance, capable de l'avertir en temps réel de la validité des opérations effectuées.

### EXPOSÉ DE L'INVENTION

Ce but est atteint au moyen d'une pipette monocanal ou multicanal à actionnement manuel pour le prélèvement et la distribution d'un échantillon d'un liquide selon un protocole prédéfini comportant un bouton de commande muni d'un dispositif de contrôle autonome apte à délivrer à un utilisateur, en temps réel au cours d'une opération de pipetage, une information relative à ladite opération de pipetage.

Le dispositif de contrôle autonome selon l'invention comporte un microcontrôleur, un module de communication sans fil permettant audit bouton de commande de communiquer, d'une part, avec un premier ensemble de capteurs destinés à mesurer des grandeurs physiques internes à la pipette et un deuxième ensemble de capteurs destinés à fournir au dispositif de contrôle autonome des données relatives à l'environnement de l'opération de pipetage, et d'autre part, avec un appareil de traitement de l'information qui enregistre tout évènement interprété à partir de données fournies par le premier et le deuxième ensemble de capteurs pendant l'opération de pipetage.

Selon l'invention, le dispositif de contrôle autonome comporte en outre un module d'alarme adapté pour générer un signal d'alerte en fonction en fonction d'informations relevées par le premier et le deuxième ensemble de capteurs et analysées par l'appareil de traitement de l'information de manière à assurer un contrôle automatique de l'exécution l'opération de pipetage selon le protocole prédéfini sans intervention directe de l'utilisateur.

Selon une autre caractéristique de l'invention, le bouton de commande est configuré pour communiquer avec d'autres pipettes connectées et/ou avec des systèmes de pipetage automatisés, et/ou avec des instruments connectés concernés par le protocole de pipetage prédéfini.

Dans un mode préféré de réalisation de l'invention, le premier ensemble de capteurs comporte des moyens pour mesurer les déplacements du bouton de commande coopérant avec des moyens pour mesurer la quantité de liquide prélevé et/ou distribué, et le deuxième ensemble de capteurs comporte au moins une horloge, au moins un capteur de mouvement et de position spatiale, et au moins un thermomètre.

Les moyens pour mesurer les déplacements du bouton de commande comportent au moins un capteur de force et/ou un capteur de vitesse et/ou un capteur d'accélération, et les moyens pour mesurer la quantité de liquide prélevée et/ou distribuée comportent au moins un capteur de pression et/ou à ultrasons et/ou un capteur optique.

Le bouton de commande équipant la pipette à actionnement manuel selon l'invention comporte un dispositif de contrôle autonome comprenant un microcontrôleur, un module de communication sans fil permettant audit bouton de commande de communiquer, d'une part, avec un premier ensemble de capteurs destinés à mesurer des grandeurs physiques internes à la pipette et un deuxième ensemble de capteurs destinés à fournir au dispositif de contrôle autonome des données relatives à l'environnement de l'opération de pipetage, et d'autre part, avec un appareil de traitement de l'information qui enregistre tout évènement interprété à partir de données fournies par le premier et le deuxième ensemble de capteurs pendant l'opération de pipetage.

Ce bouton comporte en outre un ou plusieurs capteurs parmi ceux destinés à mesurer des grandeurs physiques internes à la pipette et un ou plusieurs capteurs parmi ceux destinés à fournir au dispositif de contrôle autonome des données relatives à l'environnement de l'opération de pipetage.

Préférentiellement, le premier ensemble de capteurs intégrés à la pipette comporte au moins un capteur de force, et le deuxième ensemble de capteurs intégrés ou non à la pipette comporte au moins une horloge, au moins un capteur de mouvement et de position spatiale, et au moins un thermomètre. Le bouton de commande selon l'invention comporte également un module d'alerte adapté pour générer une alerte en fonction d'informations relevées par le premier et le deuxième ensemble de capteurs et analysées par l'appareil de traitement de l'information de manière à assurer un contrôle automatique de l'exécution l'opération de pipetage selon le protocole prédéfini sans intervention directe de l'utilisateur.

Dans un mode préféré de réalisation, le dispositif de contrôle autonome est configuré pour communiquer avec un appareil de traitement de l'information via le protocole Bluetooth de manière à permettre audit appareil de traitement de l'information d'envoyer à une unité de stockage des données partagées par un groupe d'utilisateurs autorisés relatives à l'environnement de l'opération de pipetage.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- La figure 1 illustre schématiquement une pipette selon l'invention;
- la figure 2 illustre schématiquement un bouton selon l'invention,
- la figure 3 est une vue éclatée de la figure 2,

### EXPOSÉ DÉTAILLÉ DE MODES DE RÉALISATION PARTICULIERS

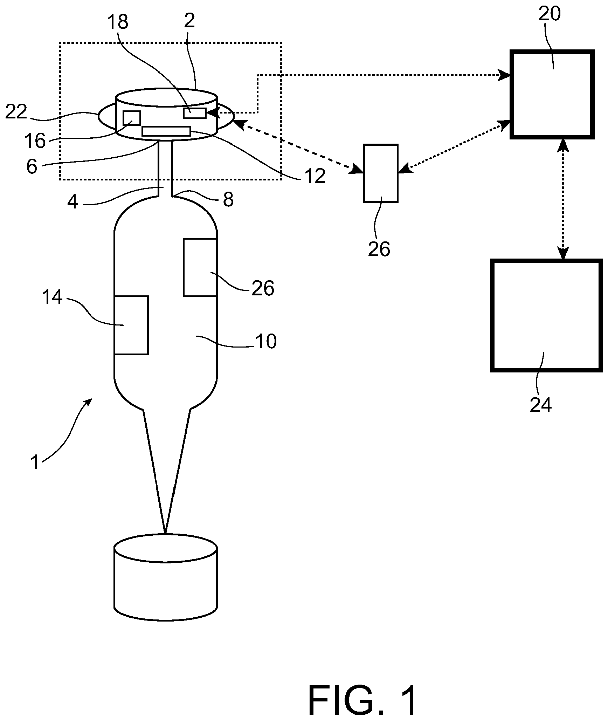

La figure 1 illustre schématiquement une pipette 1 monocanal ou multicanal à actionnement manuel munie d'un bouton de commande 2, d'une tige de commande 4 dont l'extrémité haute 6 est solidaire du bouton de commande 2 et dont l'extrémité basse 8 commande le déplacement d'un piston dans une chambre d'aspiration 10. Un capteur de force 12 est agencé dans le bouton de commande 2 pour détecter le passage du piston par une position déterminée, et un capteur de pression 14 est agencé dans la chambre d'aspiration 10 pour mesurer en temps réel la pression correspondant aux mouvement de compression et de dépression du volume de gaz compris entre le piston et le liquide à prélever. Le bouton de commande 2 comporte en outre un dispositif de contrôle autonome comprenant un microcontrôleur 16 et un module de communication sans fil 18, Bluetooth ou Wifi par exemple, permettant audit bouton de commande de communiquer, d'une part, avec le capteur de pression 14 , et avec plusieurs capteurs environnementaux 26 tels que par exemple une horloge, un capteur de mouvement et de position spatiale, un thermomètre, et d'autre part, avec un appareil de traitement de l'information 20 qui enregistre tout évènement interprété à partir de données fournies, pendant l'opération de pipetage, par le capteur de pression et le capteur de force, et par les différents capteurs environnementaux. Les valeurs de pressions mesurées au cours l'opération de pipetage sont transmises à l'appareil de traitement de l'information 20 qui trace en temps réel une courbe représentant les variations de la pression mesurée en fonction du temps. L'analyse de la courbe obtenue permet de détecter une anomalie dans l'opération de pipetage et de déclencher en temps réel une alerte au moyen d'une unité d'alarme 22. En cas d'anomalie, l'unité d'alarme transmet immédiatement à l'utilisateur un signal haptique et/ou un signal optique et/ou un signal sonore.

L'appareil de traitement de l'information 20 est relié à via une liaison WIFI par exemple à une mémoire de stockage 24 dans laquelle sont enregistrées des données propres à l'environnement de l'utilisateur et partagées par un groupe d'utilisateurs autorisés (valeurs physiques, résultats d'analyses, documentation, historique etc...

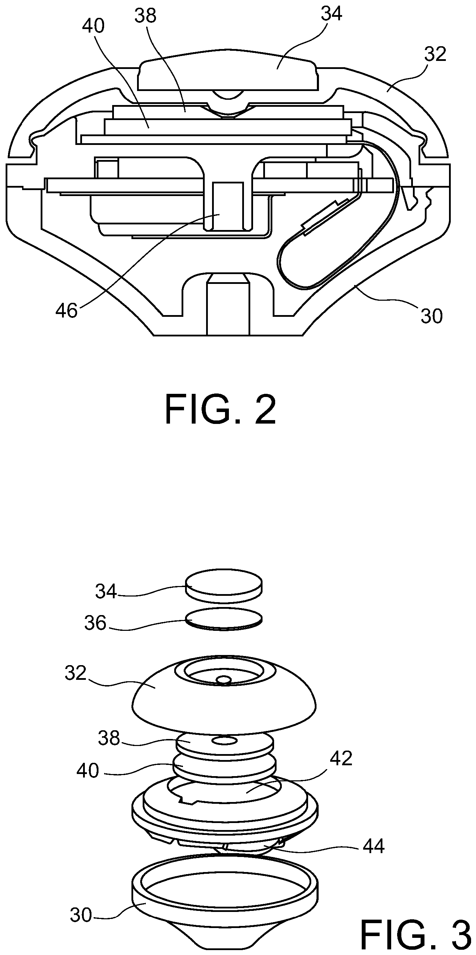

Les figures 2 et 3 représentent respectivement une vue en coupe et une vue éclatée d'un bouton de commande 2 équipant la pipette 1. Ce bouton de commande est constitué d'une base 30 surmontée d'un anneau métallique 32 comportant une ouverture centrale hébergeant une loupe 34 recouvrant une étiquette d'identification 36 comportant l'identification du modèle de la pipette 1. Un disque de répartition d'effort 38 est agencé au-dessus d'un disque élastomère 40 surplombant le capteur de force 42. Une carte électronique 44 comportant le microcontrôleur 16 associé à une mémoire dans laquelle sont enregistrées les informations relatives spécifiquement à la pipette (par exemple un numéro de série, un numéro de lot de fabrication, ainsi qu'une identification unique liée au composant utilisé pour assurer la communication sans fil (par exemple l'adresse du composant assurant la communication par Bluetooth), le module de communication sans fil 18, et l'alimentation électrique du bouton de commande est sous le disque 40.

Le disque de répartition d'effort 38, le disque élastomère 40 et le capteur de force 42 sont percés en leur centre pour accueillir un indicateur lumineux 46.

En fonctionnement, lors de l'exécution d'un protocole de pipetage donné, l'opérateur sélectionne sur l'appareil de traitement de l'information le protocole de pipetage à exécuter, procède à l'appairage de l'appareil de traitement de l'information avec la pipette et les accessoires complémentaires qui seront utilisés pour exécuter le protocole donné. Si l'opération de pipetage envisagée nécessite plusieurs pipettes, chacune de ces pipettes sera appairée avec l'appareil de traitement de l'information grâce à son identification unique stockée dans la mémoire associée au microcontroleur 16. Pour cela, la pipette ou l'accessoire sont activés par une pression sur le bouton de commandequi déclenche l'envoi d'un signal électromagnétique via une liaison sans fil (par exemple un signal Bluetooth). Les informations contenues dans le message préalablement stockées dans le bouton de la pipette ou de l'accessoire sont alors transmises à l'appareil de traitement de l'information. Après appairage, chaque action sur le bouton de la pipette déclenchera une réaction des capteurs intégrés dans le bouton de commande 1 et des capteurs environnementaux externes au bouton de commande. Ainsi, le capteur de force réagira quand il détectera une pression, validant en cela l'exécution d'une aspiration ou d'une distribution, le capteur de mouvement détectera l'usage de la pipette ou de l'accessoire, le capteur de positionnement géographique détectera la position spatiale de la pipette ou de l'accessoire dans l'environnement de l'utilisateur, et l'horloge temps réel fournira la date et l'heure précise de chaque évènement identifié par chaque capteur.

Le module de communication sans fil 18 envoie un message contenant toutes les informations fournies par chaque capteur à l'appareil de traitement de l'information 20 qui compare les informations envoyées avec le résultat attendu à l'étape du protocole de pipetage en cours. Par ailleurs, les informations recueillies par l'appareil de traitement de l'information sont recoupées entre elles.

Ainsi, si une pipette et un accessoire sont utilisés au même moment (déduction basée sur les informations fournies par les horloges temps réel) alors l'appareil de traitement de l'information 20 couple les informations reçues de la pipette avec celles reçues de l'accessoire pour générer une nouvelle information qui sera enregistrée dans le rapport.

Si l'appareil de traitement de l'information 20 détecte une anomalie dans l'exécution du protocole, il renvoie à la pipette concernée un signal d'erreur au moyen du module de communication sans fil 18. A la réception de ce signal d'erreur, la pipette concernée génère instantanément un signal d'alerte perceptible instantanément par l'utilisateur, soit sous forme visuelle (voyant lumineux intégrés aux boutons), soit sous forme sonore, soit sous forme haptique. Dans cette dernière forme, l'opérateur pourrait ressentir une vibration au niveau du pouce qui lui permettrait de réagir instantanément à l'anomalie.

Lorsque le capteur de mouvement est activé par déplacement de la pipette, le capteur de position permet de vérifier la position spatiale de la pipette. Si celle-ci se trouve dans une zone dans laquelle elle ne doit pas être, alors un signal d'alerte est envoyé à l'opérateur qui peut ainsi éviter, par exemple, de mettre une pipette contaminée dans une zone stérile ou l'inverse. Une extension de cette utilisation est envisageable dans le cas des plaques de micro titration (96 puits) évitant ou signalant ainsi une erreur de distribution dans une rangée ou dans un puits.

Lorsque le capteur de mouvement est activé, la pipette ou l'accessoire vérifie automatiquement la date courante et la date de prochaine maintenance ou contrôle. Si la date courante est postérieure à la date de prochaine maintenance ou contrôle, alors une alerte est envoyée à l'opérateur lui signifiant que la pipette ou l'accessoire ne peut être utilisé.

Les alertes ainsi listées, basées sur les informations relevées par les capteurs et comparées aux informations relayées par l'appareil de traitement de l'information 20, permettent d'avoir un contrôle accru de l'exécution des protocoles de pipetage sans demander à l'opérateur de faire ces vérifications lui-même.

Notons que lorsque le capteur de mouvement est activé par une opération complète de pipetage manuel, le microcontrôleur 16 déclenche l'enregistrement continue des valeurs de pression du volume mort de la pipette et restitue une courbe correspondant à ces valeurs de pression. Cette courbe est comparée en temps réel avec un courbe de référence encadrée par des limites de validité P+ et P-. Si la courbe mesurée sort du domaine de validité, une alarme est transmise à l'utilisateur.

Notons que ce contrôle peut être étendu à tout type de capteur qui renseignerait sur la justesse et la précision du pipetage. (Détection de propriétés physiques comme la viscosité, détection du volume délivré par un signal de type ultrason, optique, électromagnétique...) sans sortir du cadre de l'invention.

## Revendications

1. Pipette (1) monocanal ou multicanal à actionnement manuel pour le prélèvement et la distribution d'un échantillon d'un liquide selon un protocole prédéfini, comportant un bouton de commande (2) muni d'un capteur de force (12), une chambre d'aspiration (10) munie d'un piston, et un dispositif de contrôle autonome agencé dans ledit bouton de commande (2) comprenant un microcontrôleur (16) et un module de communication sans fil (18) permettant audit bouton de commande (2) de communiquer, d'une part, avec un premier ensemble de capteurs destinés à mesurer des grandeurs physiques internes à la pipette et un deuxième ensemble de capteurs destinés à collecter des données relatives à l'environnement de l'opération de pipetage, et d'autre part, avec un appareil de traitement de l'information (20),
la pipette étant **caractérisée en ce que** le premier ensemble de capteurs comprend un capteur de pression (14) agencé dans la chambre d'aspiration,
**en ce que** l'appareil de traitement de l'information (20) est configuré pour détecter une anomalie dans l'exécution du protocole prédéfini par analyse des variations en fonction du temps de la pression mesurée par le capteur de pression (14), et pour délivrer à un utilisateur, en temps réel, au cours d'une opération de pipetage, une information relative à ladite opération de pipetage,
et **en ce que** ledit dispositif de contrôle autonome comporte en outre un module d'alarme (22) configuré pour générer un signal d'alerte à l'utilisateur en cas d'anomalie détectée par l'appareil de traitement de l'information (20), de manière à assurer un contrôle automatique de l'exécution de l'opération de pipetage selon le protocole prédéfini sans intervention directe de l'utilisateur.

2. Pipette selon la revendication 1 dans laquelle le premier ensemble de capteurs comporte des moyens pour mesurer les déplacements du bouton de commande coopérant avec des moyens pour mesurer la quantité de liquide prélevée et/ou distribuée, et le deuxième ensemble de capteurs comporte au moins une horloge, au moins un capteur de mouvement et de position spatiale, et au moins un thermomètre.

3. Pipette selon la revendication 1 comportant en outre une tige de commande (4) ayant une extrémité haute (6) solidaire du bouton de commande (2) et une extrémité basse (8) commandant le déplacement d'un piston dans la chambre d'aspiration (10), le capteur de force (12) étant adapté pour détecter le passage du piston par une position déterminée, et le capteur de pression (14) étant adapté pour mesurer en temps réel la pression correspondant aux mouvement de compression et de dépression du volume de gaz compris entre le piston et le liquide à prélever afin de permettre le traçage en temps de la courbe de variation en fonction du temps de la pression mesurée, l'analyse de ladite courbe permettant de détecter une anomalie dans l'opération de pipetage et de transmettre en temps réel le signal d'alerte à l'utilisateur.

4. Pipette selon l'une des revendications précédentes, dans laquelle le signal d'alerte transmis à l'utilisateur est haptique.

5. Pipette selon l'une des revendications 1 à 3, dans laquelle le signal d'alerte transmis à l'utilisateur est optique.

6. Pipette selon l'une des revendications 1 à 3, dans laquelle le signal d'alerte transmis à l'utilisateur est sonore.

7. Pipette selon la revendication 1 dans laquelle le bouton de commande (2) est configuré pour communiquer avec d'autres pipettes connectées et/ou avec des systèmes de pipetage automatisés, et/ou avec des instruments connectés concernés par le protocole de pipetage prédéfini.

## Patentansprüche

1. Manuelle Einkanal- oder Mehrkanalpipette (1) zur Entnahme und Verteilung einer Probe einer Flüssigkeit gemäß einem vordefinierten Protokoll, welche eine mit einem Kraftsensor (12) versehene Bedientaste (2), eine mit einem Kolben versehene Ansaugkammer (10) und eine in der Bedientaste (2) angeordnete Vorrichtung zur autonomen Kontrolle aufweist, die einen Mikrocontroller (16) und ein drahtloses Kommunikationsmodul (18) umfasst, das der Bedientaste (2) ermöglicht, einerseits mit einer ersten Anzahl von Sensoren, die dazu bestimmt sind, die Pipette selbst betreffende physikalische Größen zu messen, und einer zweiten Anzahl von Sensoren, die dazu bestimmt sind, die Umgebung des Pipettiervorgangs betreffende Daten zu erfassen, und andererseits mit einer Informationsverarbeitungsvorrichtung (20) zu kommunizieren,
wobei die Pipette **dadurch gekennzeichnet ist, dass** die erste Anzahl von Sensoren einen Drucksensor (14) umfasst, der in der Ansaugkammer angeordnet ist,
dadurch, dass die Informationsverarbeitungsvorrichtung (20) dafür ausgelegt ist, eine Anomalie in der Ausführung des vordefinierten Protokolls durch Analyse der Änderungen des von dem Drucksensor (14) gemessenen Drucks in Abhängigkeit von der Zeit zu erkennen und einem Benutzer im Verlauf eines Pipettiervorgangs in Echtzeit eine diesen Pipettiervorgang betreffende Information zu liefern,
und dadurch, dass die Vorrichtung zur autonomen Kontrolle außerdem ein Alarmmodul (22) aufweist, das dafür ausgelegt ist, im Fall einer von der Informationsverarbeitungsvorrichtung (20) erkannten Anomalie ein Warnsignal für den Benutzer zu erzeugen, um so eine automatische Kontrolle der Ausführung des Pipettiervorgangs gemäß dem vordefinierten Protokoll ohne direkten Eingriff des Benutzers sicherzustellen.

2. Pipette nach Anspruch 1, wobei die erste Anzahl von Sensoren Mittel zum Messen der Verlagerungen der Bedientaste umfasst, die mit Mitteln zum Messen der entnommenen und/oder verteilten Flüssigkeitsmenge zusammenwirken, und die zweite Anzahl von Sensoren wenigstens einen Zeitgeber, wenigstens einen Sensor für Bewegung und räumliche Position und wenigstens ein Thermometer umfasst.

3. Pipette nach Anspruch 1, welche außerdem eine Steuerstange (4) mit einem oberen Ende (6), das mit der Bedientaste (2) fest verbunden ist, und einem unteren Ende (8), das die Verlagerung eines Kolbens in der Ansaugkammer (10) steuert, aufweist, wobei der Kraftsensor (12) dazu eingerichtet ist, den Durchgang des Kolbens durch eine bestimmte Position zu erkennen, und der Drucksensor (14) dazu eingerichtet ist, in Echtzeit den Druck zu messen, der den Bewegungen zur Verdichtung und zur Entspannung des Gasvolumens zwischen dem Kolben und der zu entnehmenden Flüssigkeit entspricht, um das Aufzeichnen der Kurve der Änderung des gemessenen Drucks in Abhängigkeit von der Zeit in Echtzeit zu ermöglichen, wobei die Analyse dieser Kurve ermöglicht, eine Anomalie im Pipettiervorgang zu erkennen und das Warnsignal in Echtzeit an den Benutzer zu senden.

4. Pipette nach einem der vorhergehenden Ansprüche, wobei das an den Benutzer gesendete Warnsignal ein haptisches Signal ist.

5. Pipette nach einem der Ansprüche 1 bis 3, wobei das an den Benutzer gesendete Warnsignal ein optisches Signal ist.

6. Pipette nach einem der Ansprüche 1 bis 3, wobei das an den Benutzer gesendete Warnsignal ein akustisches Signal ist.

7. Pipette nach Anspruch 1, wobei die Bedientaste (2) dafür ausgelegt ist, mit anderen angeschlossenen Pipetten und/oder mit automatisierten Pipettiersystemen und/oder mit angeschlossenen Instrumenten zu kommunizieren, die das vordefinierte Pipettierprotokoll betrifft.

## Claims

1. A manually-operated single-channel or multi-channel pipette (1) for sampling and dispensing a sample of a liquid according to a predefined protocol, including an actuating knob (2) provided with a force sensor (12),a suction chamber (10) provided with a piston and an autonomous control device arranged in said actuating knob (2) comprising a microcontroller (16), a wireless communication module (18) enabling said actuating knob (2) to communicate, on the one hand, with a first set of sensors for measuring physical quantities peculiar to the pipette and a second set of sensors for collecting data relating to the environment of the pipetting operation, and on the other hand, with an information processing apparatus (20),
the pipette being **characterized in that** the first set of sensors includes a pressure sensor (14) arranged in the suction chamber,
**in that** the information processing apparatus (20) is configured to detect a fault in performing the predefined protocol by analysing variations as a function of the time of the pressure measured by the pressure sensor (14), and to deliver to a user, in real time, during a pipetting operation, information relating to said pipetting operation,
and **in that** said autonomous control device further includes an alarm module (22) adapted to generate an alert signal as a function of information read out by the first and second sets of sensors and analysed by the information processing apparatus (20) so as to provide an automatic control for performing the pipetting operation according to the predefined protocol without a direct intervention of the user.

2. The pipette according to claim 1, wherein the first set of sensors includes means for measuring the movements of the actuating knob cooperating with means for measuring the amount of sampled and/or dispensed liquid, and the second set of sensors includes at least one clock, at least one motion and spatial position sensor, and at least one thermometer.

3. The pipette according to claim 1, further including an operating rod (4) having a top end (6) integral with the actuating knob (2) and a bottom end (8) operating the movement of a piston in the suction chamber (10), the force sensor (12) being adapted to detect the passage of the piston through a determined position, and the pressure sensor (14) being adapted to measure in real time the pressure corresponding to the compression and depression motions of the gas volume included between the piston and the liquid to be sampled in order to allow drawing versus time the variation curve as a function of the time of the measured pressure, the analysis of said curve enabling a fault in the pipetting operation to be detected and an alarm signal to be transmitted in real time to the user.

4. The pipette according to one of the preceding claims, wherein the alarm signal transmitted to the user is haptic.

5. The pipette according to one of claims 1 to 3, wherein the alarm signal transmitted to the user is optical.

6. The pipette according to one of claims 1 to 3, wherein the alarm signal transmitted to the user is acoustic.

7. The pipette according to claim 1, wherein the actuating knob (2) is configured to communicate with other connected pipettes and/or with automated pipetting systems, and/or with connected instruments relating to the predefined pipetting protocol.
